# EUROPEAN PATENT SPECIFICATION

(11) **EP 3 151 687 B1**
(45) Date of publication and mention of the grant of the patent: **28.02.2018**
(21) Application number: 15713867.8
(22) Date of filing: 27.03.2015
(51) Int. Cl.: A23L 33/20, A23L 27/60

(54) **COMPOSITION IN THE FORM OF AN OIL-IN-WATER EMULSION COMPRISING GROUND WHITE OR YELLOW MUSTARD SEED**
ZUSAMMENSETZUNG IN FORM EINER ÖL-IN-WASSER-EMULSION MIT GEMAHLENEN WEISSEN ODER GELBEN SENFSAMEN
COMPOSITION SOUS FORME D'UNE ÉMULSION HUILE DANS L'EAU CONTENANT DE LA GRAINE DE MOUTARDE BLANCHE OU JAUNE

(30) Priority: 06.05.2014 EP 14167215
(43) Date of publication of application: 12.04.2017
(73) Proprietor: Unilever NV, 3013 AL Rotterdam (NL); Unilever PLC, London, Greater London EC4Y 0DY (GB)
(72) Inventor: REGISMOND, Sudarshi Tanuja Angelique, 4051 Durban (ZA); RESZKA, Aleksander Arie, NL-3133 AT Vlaardingen (NL)
(74) Representative: Fijnvandraat, Arnoldus
(86) International application number: PCT/EP2015/056725
(87) International publication number: WO 2015/169506

(56) References cited:
- EP-A2- 0 792 587
- WO-A1-2004/056187
- US-A- 4 062 979
- US-A- 4 923 707
- US-A- 4 980 186
- US-A1- 2003 044 507
- US-A1- 2008 193 615

## Description

### FIELD OF THE INVENTION

The present invention relates to a composition in the form of an oil-in-water emulsion, preferably a mayonnaise-type emulsion, containing ground white or yellow mustard seed, to a method for preparing the emulsion, and to the use of ground white or yellow mustard seed as an ingredient of the emulsion to reduce the concentration of oil in the emulsion, as recited in the claims.

### BACKGROUND TO THE INVENTION

Mayonnaise is a food product that traditionally contains vegetable oil, egg yolk or whole egg, and vinegar. The amount of oil generally ranges from about 75% to 80% and is present as dispersed phase in the continuous aqueous phase. In some countries, especially France, mustard also is a common ingredient of mayonnaises. Mustard seeds are the prime source for mustard. Grinding the seeds and mixing with vinegar creates the condiment known as mustard. Various plant species provide mustard seeds: *Sinapis alba* and *Brassica hirta* (for white and yellow mustard), *Brassica juncea* (for brown Indian mustard or oriental mustard), and *Brassica nigra* (for black mustard).

Currently there is a tendency to decrease the oil level of mayonnaises, in order to decrease the caloric content (because of nutritional and health reasons). Lowering the amount of oil in an otherwise standard mayonnaise leads to a less dense packing of the oil droplets in the water phase resulting in reduced viscosity and/or thickness. Such decrease of the thickness of a mayonnaise can take place rapidly: upon reduction of the oil level with as little as 1% or 2%, the packing of the oil droplets becomes less dense. Such a product with reduced oil content generally will be pourable rather than spoonable. Product defects can also occur upon reduction of the oil content, e.g. emulsion instability and syneresis. Many 'light mayonnaises' are on the market, which contain less oil than the mayonnaise of the traditional recipes, and generally also contain a structurant for the water phase of the light mayo. The structurant thickens the continuous water phase, and keeps the emulsion stable during storage and use. Additionally the structurant helps to provide a product of which the thickness and viscosity are similar to the traditional mayonnaises. Common structurants are gelatinised native starches, chemically modified starches, other hydrocolloids like xanthan gum, guar gum, and carrageenan, and cellulosic fibres like the citrus fibres. The use of such structurants however can affect flavour and mouthfeel of the formulation. Starch in emulsions for example can lead to sticky and/or chewy products.

Additionally, reduction of oil in the recipes leads to reduction of the use of valuable resources like vegetable oil and oil crops, and consequently less pressure on the environment for the growing of the oil crops. Additionally, consumers more and more are in favour of products which come close to traditional recipes. Therefore modern food products should preferably be free from ingredients which are considered to be artificial or which traditionally were not present in such food products. Examples of this are additives like preservatives, colourants, flavours, structurants, and metal chelators like EDTA. Therefore ingredients which are traditionally present in food products, should also provide the functionality of such ingredients that are considered to be artificial. Also, by reducing the amount of ingredients which are considered to be artificial, valuable resources can be saved, leading to food products which are more sustainable with respect to the environment than traditionally known products. For example, without starch or gums, no crops need to be grown from which the starch or gum is extracted.

Many attempts have been made to develop mayonnaise-type emulsions, which conform to the requirements. Additionally many light mayonnaises are available on the market in which attempts have been made to produce a good quality product whose properties are close to full-fat mayonnaise.

WO 02/089602 A1 relates to an edible, reduced fat oil-in-water type emulsion. The emulsion may contain mustard, without specifying the mustard type.
EP 663 153 A1 relates to a new process for reducing the fat caloric content of food products containing fats or oils. The products may contain white mustard in combination with a fermented cereal.
CA 2 508 513 A1 discloses processes for production of products comprising yellow mustard gum. The gum is extracted from seeds. US 4,980,186 relates to extraction of gum from yellow mustard seed.
WO 2013/092086 A1 relates to an edible oil-in-water emulsion that comprises a small quantity of ground pulse seed in combination with seed mucilage gum. The mucilage is extracted from the hull from mustard seed.
US 4,062,979 discloses a process for manufacturing mustard flour. US 4,498,598 also relates to the preparation of mustard flour, which has reduced pungency. This is obtained by heating the flour to a temperature ranging from 60 to 200°C, during a time period from 1 to 60 minutes.
US 4 923 707 relates to a method for the manufacture of mayonnaise having an oil content in the lower end of the permissible range and to the product produced by the method. The document mentions ground whole mustard seed, and is silent on the type of mustard seed that is applied. Additionally it is silent on grinding mustard seed in the presence of vinegar.
WO 2004/056187 A1 relates to edible emulsions (e.g. dressings or sauces) for use with hot food products and to processes for preparing these emulsions. This document mentions mustard as a possible ingredient of the emulsions, however is silent on white or yellow mustard, and additionally is silent on grinding mustard seed in the presence of vinegar.
EP 0 792 587 A2 relates to a method for the manufacture of viscous and pourable dressings having a reduced fat content.
US 2008/193615 A1 relates a low fat or oil consumer product comprising a natural preservative system and method for making the same.
US 2014/0272075 A1 (not pre-published) relates to an enhanced viscosity mustard paste. This document is silent about an oil-in-water emulsion comprising ground yellow mustard seed.
WO 2014/124032 A1 (not pre-published) relates to a deflavoured mustard paste. This document is silent about an oil-in-water emulsion comprising ground yellow mustard seed.

### SUMMARY OF THE INVENTION

Mayonnaise has a specific structure, thickness, taste, mouthfeel, and stability during shelf-life, which is established by the high oil content. Many consumer love traditional mayonnaise, and when decreasing the oil level, the new product should not compromise on these properties in order to satisfy these consumers. Therefore there is an increasing demand for mayonnaise-type products having a lower oil content of without compromise on the sensorial properties associated with full fat mayonnaise such as thickness and mouthfeel. Moreover the products should contain only a low concentration of (or even be free from) from thickeners and other structurants which are considered to be artificial by the consumers.

We have now developed an oil-in-water emulsion containing ground white or yellow mustard seed, that has a reduced oil content, and nevertheless has a structure and properties which are similar as a traditional full-fat mayo, without using polymeric or oligomeric water structurants. The whole seeds of white or yellow mustard are needed, such that no process steps like dehulling or extraction of the seeds are needed. A natural ingredient is used, which traditionally may be present in mayonnaise-type emulsions. Only grinding the whole seed, in the presence of water and vinegar, is sufficient to easily provide a material that can be used in the compositions of the invention. Moreover the compositions do not require thickeners and other structurants not originating from egg yolk or white mustard seed.

Accordingly in a first aspect the invention provides a composition in the form of an oil-in-water emulsion, comprising from 65% to 74% by weight of oil, from 0.1 % to 10% by weight of acid,
from 0.4% to 3.5% by weight of ground white or yellow mustard seed originating from the species *Sinapis alba or Brassica hirta,* wherein the ground white or yellow mustard seed is obtained by grinding white or yellow mustard seed in the presence of water and vinegar, wherein the weight ratio between mustard seed and [water and vinegar] ranges from 1:2 to 1:9, and
wherein the ground mustard seed is used in the form of a paste, containing 10% to 30% ground mustard seed and 70% to 90% aqueous phase, including vinegar, and from 0.5% to 10% by weight of egg yolk,
having a pH ranging from 3 to 5,
wherein the composition is a mayonnaise, and wherein the concentration of polymeric or oligomeric water structurants not originating from egg yolk or white mustard seed is maximally 1 % by weight of the emulsions, and
wherein the structurant is a compound or a mixture of compounds which is an oligomer (meaning a branched or unbranched molecule containing a maximum of 20 monomer units) or a polymer (meaning a branched or unbranched molecule containing more than 20 monomer units) which is dispersible in water or dissolves in water to thicken or bind the water and increase the viscosity of the mixture as compared to pure water, and wherein the structurant does not originate from egg yolk, whole egg, enzyme modified egg yolk, egg yolk modified with phospholipase, egg yolk modified with phospholipase A2, white or yellow mustard seed, and ground white or yellow mustard seed, and wherein the emulsion has a Stevens value at 20°C of at least 70 gram, wherein the Stevens value is determined by using a Stevens LFRA Texture Analyser (ex Brookfield Viscometers Ltd., UK) with a maximum load/measuring range of 1000 grams, and applying a penetration test of 25 mm using a grid, at 2 mm per second penetration rate, in a cup having a diameter of 65 mm, that contains the emulsion; wherein the grid comprises 76 square openings of approximately 3x3 mm, is made up of wire with a thickness of approximately 1 mm, and has a diameter of 40 mm.

In a second aspect the present invention provides a method for making a composition according to the first aspect of the invention, comprising the steps:
a) mixing water, acid, egg yolk, and ground mustard seed in a stirred vessel, wherein the ground white or yellow mustard seed is obtained by grinding white or yellow mustard seed in the presence of water and vinegar; wherein the weight ratio between mustard seed and [water and vinegar] ranges from 1:2 to 1:9, and wherein the ground mustard seed is used in the form of a paste, containing 10% to 30% ground mustard seed and 70% to 90% aqueous phase, including vinegar, and
b) adding the oil to the mixture of step a) while stirring;
c) homogenising the mixture of step b) to create an oil-in-water emulsion wherein the oil droplets have a volume weighted mean droplet size D3,3 of less than 10 micrometer; using a colloid mill operating at a rotation rate ranging from 2,000 to 14,000 rpm;
and wherein the concentration of polymeric or oligomeric water structurants not originating from egg yolk or white mustard seed is maximally 1% by weight of the emulsion, and
wherein the structurant is a compound or a mixture of compounds which is an oligomer (meaning a branched or unbranched molecule containing a maximum of 20 monomer units) or a polymer (meaning a branched or unbranched molecule containing more than 20 monomer units) which is dispersible in water or dissolves in water to thicken or bind the water and increase the viscosity of the mixture as compared to pure water, and wherein the structurant does not originate from egg yolk, whole egg, enzyme modified egg yolk, egg yolk modified with phospholipase, egg yolk modified with phospholipase A2, white or yellow mustard seed, and ground white or yellow mustard seed. In a third aspect the present invention provides the use of ground white or yellow mustard seed as ingredient of an oil-in-water emulsion to reduce the concentration of oil in the emulsion, wherein the ground white or yellow mustard seed is obtained by grinding white or yellow mustard seed in the presence of water and vinegar,
and wherein the weight ratio between mustard seed and [water and vinegar] ranges from 1:2 to 1:9, and wherein the ground mustard seed is used in the form of a paste, containing 10% to 30% ground mustard seed and 70% to 90% aqueous phase, including vinegar, and
wherein the emulsion is a mayonnaise, and
wherein the concentration of polymeric or oligomeric water structurants not originating from egg yolk or white mustard seed is maximally 1% by weight of the emulsion,
and wherein the structurant is a compound or a mixture of compounds which is an oligomer (meaning a branched or unbranched molecule containing a maximum of 20 monomer units) or a polymer (meaning a branched or unbranched molecule containing more than 20 monomer units) which is dispersible in water or dissolves in water to thicken or bind the water and increase the viscosity of the mixture as compared to pure water, and wherein the structurant does not originate from egg yolk, whole egg, enzyme modified egg yolk, egg yolk modified with phospholipase, egg yolk modified with phospholipase A2, white or yellow mustard seed, and ground white or yellow mustard seed.

### DETAILED DESCRIPTION OF THE INVENTION

All percentages, unless otherwise stated, refer to the percentage by weight (wt%).

In here, white or yellow mustard seeds are considered to be synonyms. In many publications both white mustard seeds and yellow mustard seeds are used for the same seeds: both terms are used for the seeds from the species *Sinapis alba. Sinapis alba* is also sometimes referred to as *Brassica alba* or *Brassica hirta.* In here *Sinapis alba, Brassica alba* and *Brassica hirta* are considered to be the same species.

D4,3 is the volume weighted mean diameter of a set of droplets or particles. The volume based diameter equals the diameter of a sphere that has the same volume as a given particle (M. Alderliesten, Particle & Particle Systems Characterization 8 (1991) 237-241). "Spoonable" means that a composition is semi-solid but not free-flowing on a time scale typical for eating a meal, meaning not free-flowing within a time period of an hour. A sample of such substance is able to be dipped with a spoon from a container containing the composition.
"Pourable" is understood to mean that a composition is free-flowing; generally a spoon is not required to take a sample from a container containing a pourable composition. "Polymeric or oligomeric water structurant" is understood to mean that this is a compound or a mixture of compounds which is an oligomer (meaning a branched or unbranched molecule containing a maximum of 20 monomer units) or a polymer (meaning a branched or unbranched molecule containing more than 20 monomer units) which is dispersible in water or dissolves in water to thicken or bind the water and increase the viscosity of the mixture as compared to pure water. In here a "polymeric or oligomeric water structurant" does not originate from egg yolk, whole egg, enzyme modified egg yolk, egg yolk modified with phospholipase, egg yolk modified with phospholipase A2, white or yellow mustard seed, and ground white or yellow mustard seed,
Except in the operating and comparative examples, or where otherwise explicitly indicated, all numbers in this description indicating amounts or ratios of material or conditions of reaction, physical properties of materials and/or use are to be understood as modified by the word "about".

In a first aspect the invention provides a composition as recited in claim 1.

The composition is a mayonnaise. Generally such a mayonnaise is spoonable.

Mayonnaise is generally known as a thick, creamy sauce that can be used as a condiment with other foods. Mayonnaise is a stable water-continuous emulsion of vegetable oil, egg yolk and either vinegar or lemon juice. In many countries the term mayonnaise may only be used in case the emulsion conforms to the 'standard of identity', which defines the composition of a mayonnaise. For example, the standard of identity may define a minimum oil level, and a minimum egg yolk amount. Also mayonnaise-like products having oil levels lower than defined in a standard of identity can be considered to be mayonnaises. These kind of products often contain thickeners like starch to stabilise the aqueous phase. Mayonnaise may vary in colour, and is generally white, cream-coloured, or pale yellow. The texture may range from of light creamy to thick, and generally mayonnaise is spoonable. In the context of the present invention 'mayonnaise' includes emulsions with oil levels ranging from 65% to 74% by weight of the product. Mayonnaises in the context of the present invention do not necessarily need to conform to a standard of identity in any country.

The term 'oil' as used herein refers to lipids selected from triglycerides, diglycerides, monoglycerides and combinations thereof. Preferably the oil in the context of this invention comprises at least 90 wt% of triglycerides, more preferably at least 95 wt%. Preferably the oil contains less than 20 wt% of solid oil at 5°C, preferably less than 10 wt% solid oil. More preferred the oil is free from solid oil at 5°C. Most preferred the oil is liquid at 5°C. Preferred oils for use in the context of this invention are vegetable oils which are liquid at 5°C. Preferably the oil comprises sunflower oil, rapeseed oil, olive oil, soybean oil, and combinations of these oils.

The composition of the invention contains from 65% to 74% by weight of oil. Preferably the composition of the invention comprises from 66% to 74% by weight of oil, preferably from 68% to 74% by weight of oil. Preferably the composition of the invention comprises from 70% to 74% by weight of oil, preferably from 71% to 74% by weight.

The acid used in the composition of the invention are regular acids typically used in food emulsions. The composition comprises from 0.1% to 10% by weight of acid, preferably from 0.1% to 5% by weight of acid, preferably from 0.1% to 2% by weight of acid. The acid preferably is selected from acetic acid, citric acid, lactic acid, phosphoric acid, and combinations thereof. Acetic acid may be added as a component of vinegar, and citric acid may be added as a component of lemon juice. The amount of acid is such that the pH ranges from 3 to 5, preferably from 3 to 4.6. Preferably the composition contains at least 0.2% by weight of free acetic acid. This way a natural preservation system is created to improve storage time of the composition.

The composition of the present invention comprises ground white or yellow mustard seed originating from the species *Sinapis alba* or *Brassica hirta.* These specific mustard seeds have the property that they can be used to provide additional structure to a mayonnaise which is reduced in oil content as compared to a traditional full-fat mayonnaise, without using polymeric water-structurants. Additionally, due to the colour of the ground seeds, they can be used in the emulsion without negatively affecting the colour or appearance of the emulsion.

Advantageously, the whole seed of the white or yellow mustard is used to prepare the ground mustard seed. Dehulling is not required, extraction of compounds from the seeds is not required, and drying the seeds is not required. Grinding of the whole seeds is required, which is a process well known to the skilled person. The ground white or yellow mustard seed is obtained by grinding white or yellow mustard seed in the presence of water and vinegar. Preferably the weight ratio between mustard seed and [water and vinegar] ranges from 1:2 to 1:9, preferably from 1:2.2 to 1:6. Preferably the pH of the aqueous mixture containing mustard seed is maximally 3.8. Preferably the amount of mustard seed in the mixture ranges from 10% to 30% by weight, preferably from 15% to 25% by weight. Preferably the amount of water and vinegar ranges from 70% to 90% by weight, preferably from 75% to 85% by weight. Preferably the temperature at which the grinding is done ranges from about 20°C to 65°C, preferably from 40°C to 60°C. Preferably a stone grinder is used to prepare the ground mustard seed. After the grinding the ground mustard seed is very fine, preferably having a volume weighted mean diameter D4,3 of the solid particles smaller than 150 micrometer, preferably smaller than 140 micrometer. Preferably the mustard oil droplets originating from the mustard seed have a volume weighted geometric mean diameter D4,3 of less than 1 micrometer. The advantage of using this material is that the emulsion containing this material is smoother than that with other ground mustard seeds.

The concentration of ground white or yellow mustard seed originating from the species *Sinapis alba* or *Brassica hirta* ranges from 0.4% to 3.5% by weight of the composition. These amounts of mustard seed are based on the amount of ground mustard seed as such.

Preferably the ground mustard seed is used in the form of a paste, which preferably contains about 10% to 30% ground mustard seed and 70% to 90% aqueous phase (including vinegar), preferably about 15% to 25% ground mustard seed and 75% to 85% aqueous phase (including vinegar). Such paste is generally the result of the wet grinding of the mustard seeds. The pH of such a paste preferably ranges from 2 to 4, preferably to maximally 3.6. Such pastes are supplied by for example Wisconsin Spice, Inc. (Berlin, WI, USA).

Yellow or white mustard seeds contain the glucosinolate sinalbin. This compound is converted with water into a range of isocyanate compounds, catalysed by the enzyme myrosinase. These compounds are naturally present in yellow mustard seed. Upon hydrolysis of sinalbin, p-hydroxybenzyl isothiocyanate is formed. This is a pungent compound, typical for mustard seeds. p-Hydroxybenzyl isothiocyanate is unstable and degrades in a few hours to 4-hydroxybenzyl alcohol and a thiocyanate ion, which are not pungent. The hydrolysis of sinalbin typically takes place upon the grinding of the seeds, and when the ground mustard seed has been brought into contact with water.

The hydrolysis of sinalbin can be prevented by heating whole yellow or white mustard seeds including hull with steam, to de-activate the enzyme myrosinase. This heating typically is done at a temperature of at least 72°C. The higher the temperature the shorter the time period that is required to heat the seeds. The advantage of this process is that mustard seeds are prepared which do not provide the pungent flavour, and nevertheless retain the functional structural properties to stabilise the emulsion of the invention. The seeds which are treated this way are generally called de-heated mustard seeds. Preferably de-heated mustard seeds are used in the composition of the invention. Preferably after the heating process the de-heated mustard seeds are dried at ambient temperature. Preferably after drying the de-heated mustard seed is ground, resulting into very fine ground mustard seed, in the form of a paste. Preferably the composition of the invention comprises the de-heated mustard seed which has been ground. The advantage of using this material is that the emulsion containing this material is smooth and has a very low mustard flavour. Such ground de-heated mustard is supplied by for example Wisconsin Spice, Inc. (Berlin, WI, USA), for example as 'De-heated white mustard paste D', or as 'Mustard Paste - Low Flavor (LF), Vers A'.

Preferably the concentration of isothiocyanates in the ground mustard seed is less than 10 milligram per kilogram of the ground seed. Preferably the concentration of allylisothiocyanate in the ground mustard seed is less than 10 milligram per kilogram of the ground seed. Preferably the concentration of p-hydroxybenzyl isothiocyanate in the ground mustard seed is less than 5 milligram per kilogram of the ground seed, preferably less than 2 milligram per kilogram of the ground seed, preferably less than 1 milligram per kilogram of the ground seed. The de-heated ground white or yellow mustard seed is less pungent than regular ground white or yellow mustard seed.

The emulsions of the present invention contain egg yolk. The presence of egg yolk may be beneficial for taste, emulsification and/or stability of the oil droplets. Egg yolk contains phospholipids, which act as emulsifier for the oil droplets. Preferably the concentration of egg yolk in the composition of the invention ranges from 1% to 8% by weight of the emulsion, more preferred from 2% to 6% by weight of the emulsion. The egg yolk may be added as egg yolk component, meaning largely without egg white. Alternatively, the composition may also contain whole egg, containing both egg white and egg yolk. The total amount of egg yolk in the composition of the invention includes egg yolk that may be present as part of whole egg. Preferably the concentration of phospholipids originating from egg yolk ranges from 0.05% to 1% by weight, preferably from 0.1% to 0.8% by weight of the emulsion.

The egg yolk may be used native, or part of the egg yolk in the composition of the invention may have been subjected to an enzymatic conversion process using phospholipase. Preferably the phospholipase that is used to treat egg yolk is phospholipase A2. This process leads to split off of fatty acid chains from the phospholipid molecules, and yields so-called enzyme-modified egg yolk. The reaction products of this enzymatic process are retained in the enzyme-modified egg yolk, meaning that the enzyme-modified egg yolk contains fatty acids split off from the phospholipids. The reaction products of a process with phospholipase A2 are mainly lysophosphatidylcholines (or lysolecithins) and fatty acids. The concentration of the phospholipids 1-lysophosphatidylcholine, 2-lysophosphatidylcholine, and lysophosphatidylethanolamine is increased as compared to the native egg yolk. By this hydrolysis, the emulsifying properties of the egg yolk can be tuned, while the egg yolk retains its organoleptic properties. A suitable source of enzyme modified egg yolk is 'Heat stabilised egg yolk (92-8)', supplied by Bouwhuis Enthoven (Raalte, the Netherlands). This sample contains 92% enzyme modified egg yolk and 8% table salt.

In case egg yolk treated with phospholipase is used in the composition of the invention, then preferably at least 20% by weight of the egg yolk has been modified by treatment with a phospholipase, preferably with phospholipase A2. The advantage of the use of the enzyme modified egg yolk is that the thickness of the emulsion is increased, as compared to the use of native egg yolk. Preferably maximally 90% by weight of the egg yolk has been modified by treatment with phospholipase, preferably with phospholipase A2. Preferably the concentration of egg yolk which has been modified by treatment with phospholipase, preferably with phospholipase A2, ranges from 0.5% to 4% by weight of the composition, preferably from 1% to 4% by weight of the composition. Preferably the total concentration of 1-lysophosphatidylcholine and 2-lysophosphatidylcholine ranges from 0.02% to 0.2% by weight of the emulsion.

In case the emulsions contain enzyme modified egg yolk, then preferably the emulsion contains oil at a concentration ranging from 65% to 73% by weight of the emulsion, more preferred from 66% to 72% by weight of the emulsion, more preferred from 66% to 70% by weight of the emulsion.

As already indicated herein before, many mayonnaise-type emulsions with reduced fat levels contain a structurant to stabilise the continuous water phase and to thicken the emulsion. Many structurants are oligomers or polymers from vegetable, microbial, or animal origin. The structurants can be water-soluble or water-insoluble, and they may be used native or in chemically or physically modified form. Examples of structurants from vegetable origin are water-soluble polysaccharides like native starches, chemically modified starches, carrageenan, locust bean gum, carboxymethyl cellulose, and pectin. Also oligosaccharides and polysaccharides present in corn syrup or glucose syrup may be used as structurant in mayonnaise-type emulsions. Adiitonally proteins from vegetable origin may be used as structurant in oil-in-water emulsions, for example ground pulse seed may be used to provide structure to an emulsion. Examples of water-insoluble structurants from vegetable origin are cellulosic fibres like citrus fibres and tomato fibres. Examples of structurants from microbial or algae origin are the polysaccharides xanthan gum, agar, and alginate. Examples of polymeric structurants from animal origin are proteins like casein from cow's milk and gelatin.

The advantage of the present invention is that the oil content of the emulsion can be reduced, without adding large amounts of polymers or oligomers to stabilise the aqueous phase. The composition of the invention comprises polymeric or oligomeric water structurants not originating from egg yolk or white mustard seed at a concentration of maximally 1% by weight of the emulsion. Preferably the concentration of polymeric or oligomeric water structurants not originating from egg yolk or white mustard seed is maximally 0.5% by weight of the-emulsion, preferably maximally 0.2% by weight, preferably the composition is substantially free from polymeric or oligomeric water structurants not originating from egg yolk or white mustard seed. More preferred the composition of the invention is free from polymeric or oligomeric water structurants. Egg yolk, whole egg, enzyme modified egg yolk, egg yolk modified with phospholipase, egg yolk modified with phospholipase A2, white or yellow mustard seed, and ground white or yellow mustard seed may also contain polymeric or oligomeric water structurants, and therefore the compounds originating from these sources are excluded from the definition of polymeric or oligomeric water structurants. Therefore most preferred the composition of the invention is free from polymeric or oligomeric water structurants which do not originate from egg yolk, whole egg, enzyme modified egg yolk, , egg yolk modified with phospholipase, egg yolk modified with phospholipase A2, white or yellow mustard seed, or ground white or yellow mustard seed.

The concentration of starch, native starch, modified starch, gums, pectins, and other hydrocolloids which do not originate from egg yolk, whole egg or white or yellow mustard seed in the composition of the invention is maximally 1% by weight, preferably maximally 0.5% by weight, preferably maximally 0.1 % by weight. More preferred the composition of the invention is substantially free from starch, native starch, modified starch, gums, pectins, and other hydrocolloids which do not originate from egg yolk, whole egg or white or yellow mustard seed. Most preferred the composition of the invention is free from starch, native starch, modified starch, gums, pectins, and other hydrocolloids which do not originate from egg yolk, whole egg or white or yellow mustard seed.

The concentration of insoluble fibre, preferably cellulose fibre, preferably citrus fibre, which do not originate from egg yolk, whole egg or white or yellow mustard seed in the composition of the invention is maximally 1% by weight, preferably maximally 0.5% by weight, preferably maximally 0.1 % by weight. More preferred the composition of the invention is substantially free from insoluble fibre, preferably cellulose fibre, preferably citrus fibre, which do not originate from egg yolk, whole egg or white or yellow mustard seed. Most preferred the composition of the invention is substantially free from insoluble fibre, preferably cellulose fibre, preferably citrus fibre, which do not originate from egg yolk, whole egg or white or yellow mustard seed.

The composition of the invention typically is spoonable as opposed to solid or pourable. The firmness of the composition can be characterised by the Stevens value of the composition, which determines the hardness of the composition, preferably measured after storage for 1 week. The emulsion has a Stevens value at 20°C of at least 70 gram.

Preferably the emulsion has a Stevens value at 20°C of at least 100 gram. Preferably the emulsion has a Stevens value at 20°C of at least 80 gram, preferably at least 100 gram, preferably from 100 to 200 gram, preferably from 100 to 150 gram. The Stevens value is determined at 20°C by using a Stevens LFRA Texture Analyser (ex Brookfield Viscometers Ltd., UK) with a maximum load/measuring range of 1000 grams, and applying a penetration test of 25 mm using a grid, at 2 mm per second penetration rate, in a cup having a diameter of 65 mm, that contains the emulsion; wherein the grid comprises square openings of approximately 3x3 mm, is made up of wire with a thickness of approximately 1 mm, and has a diameter of 40 mm. The grid comprises 76 square openings of 3x3 mm, is made up of wire with a thickness of 1 mm, and has a diameter of 40 mm. This methodology is further described herein in the experimental section.

The viscosity of the present emulsion typically lies in the range of 100-80,000 mPa.s, more preferably in the range of 200-30,000 mPa·s. The viscosity can be determined using a Brookfield viscometer operated at 50 rpm and 20°C, using the appropriate spindle for the expected viscosity (according to ISO2555).

The oil-in-water emulsion of the present invention preferably has a storage modulus G', measured at 20°C, within the range of 100-3,500 Pa, more preferably in the range of 500-2,000 Pa.

The G' of the emulsion is measured using a standard protocol with the following consecutive steps. First the sample is rested for 3 minutes after the introduction into the rheometer to allow relaxation of the stresses accumulated due to the loading of the sample. Then a stress sweep is applied in which the oscillatory stress is increased from 0.1 to 1768 Pa in logarithmic steps (15 per decade). This step is terminated when the phase angle exceeds 80°. From this step the G' (storage modulus) is taken in the linear viscoelastic region as described below.

The storage modulus G' is the mathematical description of an object's or substance's tendency to be deformed elastically (i.e., non-permanently) when a force is applied to it. The term 'storage' in storage modulus refers to the storage of the energy applied to the sample. The stored energy is recovered upon the release of the stress. The storage modulus of an oil-in-water emulsion is suitably determined by a dynamic oscillatory measurement, where the shear stress is varied (from low to high stress) in a sinusoidal manner. The resulting strain and the phase shift between the stress and strain is measured. From the amplitude of the stress and the strain and the phase angle (phase shift) the storage modulus is calculated. Herein, the G' (Pa) is taken at the plateau value at low stress (linear viscoelastic region). For these measurement a suitable rheometer is used (e.g. a AR2000 rheometer from TA Instruments, New Castle, DE, USA).

The emulsion may suitably contain one or more additional ingredients which are common to mayonnaise-type emulsions. Examples of such optional ingredients include salt, spices, sugars (in particular mono- and/or disaccharides), vitamins, flavouring, colouring, preservatives, antioxidants, chelators, herbs and pieces of vegetable. Such optional additives, when used, collectively, do not make up more than 40%, more preferably not more than 20% by weight of the emulsion.

In a second aspect the present invention provides a method for making a composition according to the first aspect of the invention, as recited in claim 7. The homogenisation in step c) is done during a time period long enough that the dispersed oil phase typically has a volume weighted geometric mean diameter D3,3 of less than 10 micrometer, preferably from 0.3 to 10 micrometer, preferably from 0.5 to 8 micrometer. Preferably the oil droplets of the emulsion obtained in step d) have a volume weighted geometric mean droplet size D3,3 of less than 6 micrometer. This mean diameter may suitably be determined using the method described by Goudappel et al. (Journal of Colloid and Interface Science 239, p. 535-542, 2001). Typically, 80 to 100% of the total volume of the oil droplets contained in the present emulsion have a diameter of less than 15 micrometer, more preferably of 0.5-10 micrometer. In step c) the homogenisation is performed using a colloid mill operating at a rotation rate ranging from 2,000 to 14,000 rpm. The use of the white mustard paste has the advantage that a lower rotation speed of the colloid mill is required than for preparing an emulsion without white mustard paste. Still an emulsion having a thickness characterised by a Stevens value of at least 70 g can be prepared. This way energy can be saved in the production process. The actual rotation rate will be dependent on the scale of the colloid mill. A colloid mill having a larger diameter than another colloid mill, requires a smaller rotation rate to achieve the same linear speed of the rotor of the colloid mill than the smaller mill.

Preferred aspects described in the context of the first aspect of the invention are applicable to this aspect of the invention, *mutatis mutandis.*

In a third aspect the present invention provides the use of ground white or yellow mustard seed as ingredient of an oil-in-water emulsion to reduce the concentration of oil in the emulsion, as recited in claim 8. Preferred aspects described in the context of the first or second aspect of the invention are applicable to this aspect of the invention, *mutatis mutandis.*

### DESCRIPTION OF FIGURES

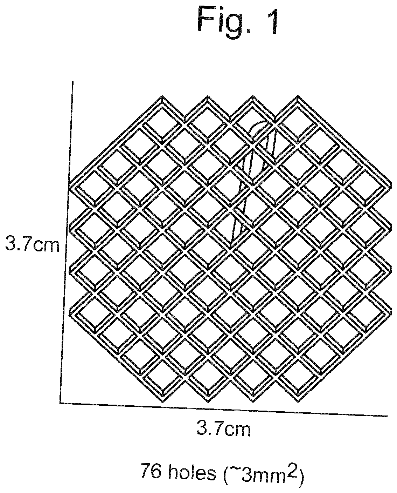

*Figure 1*: Picture of grid used for determining the Stevens value of oil-in-water emulsions as used herein.

### EXAMPLES

The following non-limiting examples illustrate the present invention.

### Raw Materials

- Superfine ground yellow mustard #211, ex G.S. Dunn Limited (Hamilton, Ontario, Canada); dry powder prepared from whole mustard seed.
- Pure yellow mustard flour #106, ex G.S. Dunn Limited (Hamilton, Ontario, Canada); dry powder prepared from the endosperm of the mustard seed (excluding the hull).
- Fine yellow mustard bran #412, ex G.S. Dunn Limited (Hamilton, Ontario, Canada); dry powder prepared from the hull of the mustard seed.
- Mustard DV15, ex Kühne (Hamburg, Germany); a mustard paste containing 20% of ground mustard seed and 80% water and vinegar.
- White mustard paste, high solids, ex Wisconsin Spice, Inc. (Berlin, WI, USA); a viscous paste containing 20 wt% ground whole mustard seed, water, and vinegar.
- De-heated white mustard paste D, ex Wisconsin Spice, Inc. (Berlin, WI, USA); a viscous paste containing 20 wt% ground mustard seed and vinegar; the enzyme myrosinase has been inactivated by subjecting the seed to a humidity-time-temperature treatment.
- The following egg preparations were all obtained from Bouwhuis Enthoven (Raalte, the Netherlands):
   - Egg blend of whole egg and egg yolk, used in example 1;
   - Egg yolk;
   - Enzyme modified egg yolk (egg yolk treated with phospholipase A2, fragments are retained in the product);
   - Enzyme modified egg blend (egg blend mentioned above, treated with phospholipase A2, fragments are retained in the product).
- Soybean oil ex Cargill (Amsterdam, The Netherlands).
- Modified Starch: Thermflo, a modified food starch derived from waxy maize ex Ingredion (Bridgewater, NJ, USA).
- Sugar: sucrose white sugar W4 ex Suiker Unie (Oud Gastel, Netherlands).
- Sorbic acid: ex Univar (Zwijndrecht, Netherlands).
- Vinegar: 12% Branntweinessig ex Carl Kühne (Hamburg, Germany).
- Lemon juice: concentrate 45°brix ex Döhler (Darmstadt, Germany).
- Salt: NaCl suprasel ex Akzo Nobel (Amersfoort, Netherlands).
- EDTA: Dissolvine E-CA-10 ex Akzo Nobel (Amersfoort, Netherlands).
- Xanthan gum: FNCS ex Jungbunzlauer (Basel, Switzerland).
- Guar gum: type 2463 ex Willy Benecke GmbH (Hamburg, Germany).
- Potassium sorbate: granules ex Daicel Nanning Food Ingredients Co. Ltd.

### Methods

*Thickness - Stevens value:* the Stevens value is determined at 20°C by using a Stevens LFRA Texture Analyser (ex Brookfield Viscometers Ltd., UK) with a maximum load/measuring range of 1000 grams, and applying a penetration test of 25 mm using a grid, at 2 mm per second penetration rate, in a cup having a diameter of 65 mm, that contains the emulsion; wherein the grid comprises square openings of approximately 3x3 mm, is made up of wire with a thickness of approximately 1 mm, and has a diameter of 40 mm. One end of a shaft is connected to the probe of the texture analyser, while the other end is connected to the middle of the grid. The grid is positioned on the flat upper surface of the emulsion in the cup. Upon starting the penetration test, the grid is slowly pushed downward into the emulsion by the texture analyser. The final force exerted on the probe is recorded and translated into the Stevens value in gram. A photograph of the grid is given in Figure 1. The grid is made from stainless steel, and has 76 holes, each hole having a surface area of approximately 3x3 mm.

*Syneresis*: Syneresis in an oil-in-water emulsion is the expelling of aqueous liquid, which separates from the product during storage after disrupting the structure by e.g. spooning. In this test gravimetric drip of expelled water from an oil-in-water emulsion into an acrylic cylinder is determined during a storage period at various climate conditions.

Materials: Acrylic cylinder (length 45 mm, inner diameter 21 mm, wall thickness 2 mm, open at two ends) and qualitative filter paper, type 415, diameter 75mm (ex VWR, Amsterdam, Netherlands). The filter is applied at one end of the cylinder and attached to the outside cylinder wall by adhesive tape. The tube with filter is vertically inserted into an emulsion sample of 225 mL in ajar, until the top of the cylinder is at level with the emulsion surface. The jar is closed with a lid, and stored at 5°C or 20°C. The amount of liquid in the tube after storage is determined by taking out the liquid from the tube (which has passed through the filter into the tube) with a pipette, and weighing the amount of liquid (in gram) after a determined amount of time. The lower the syneresis value, the better for the stability of the emulsion. Usually measurements are done in duplicate.

### Example 1: Influence of Mustard Type on Thickness of Emulsions

Various ground mustard seed types were used to prepare mayonnaise-type oil-in-water emulsions. The compositions of the prepared products are given in Table 1, and the influence of the various mustard types was tested at two concentrations.

**Table 1 Composition of emulsions containing various mustard seed types.**

| *Ingredient* | *1 [wt%]* | *2 [wt%]* | *3-1 [wt%]* | *3-2 [wt%]* | *4-1 [wt%]* | *4-2 [wt%]* |
|---|---|---|---|---|---|---|
| Soybean oil | 75 | 72 | 72 | 72 | 72 | 72 |
| Water | to 100% | to 100% | to 100% | to 100% | to 100% | to 100% |
| Egg blend | 6.7 | 6.7 | 6.7 | 6.7 | 6.7 | 6.7 |
| Sugar | 1.3 | 1.4 | 1.4 | 1.4 | 1.4 | 1.4 |
| Salt | 1.7 | 1.8 | 1.6 | 1.6 | 1.6 | 1.6 |
| Vinegar | 2.5 | 2.6 | 2.1 | 2.1 | 2.1 | 2.1 |
| Flavouring and spices | 0.3 | 0.3 | 0.3 | 0.3 | 0.3 | 0.3 |

| *Mustard types*^{#} | | | | | | |
|---|---|---|---|---|---|---|
| White mustard paste, high solids | | | 1.5 | 3.0 | | |
| Mustard DV15 | | | | | 1.5 | 3.0 |
| | | | | | | |

| *Ingredient* | *5-1 [wt%]* | *5-2 [wt%]* | *6-1 [wt%]* | *6-2 [wt%]* | *7-1 [wt%]* | *7-2 [wt%]* |
|---|---|---|---|---|---|---|
| Soybean oil | 72 | 72 | 72 | 72 | 72 | 72 |
| Water | to 100% | to 100% | to 100% | to 100% | to 100% | to 100% |
| Egg blend | 6.7 | 6.7 | 6.7 | 6.7 | 6.7 | 6.7 |
| Sugar | 1.4 | 1.4 | 1.4 | 1.4 | 1.4 | 1.4 |
| Salt | 1.8 | 1.8 | 1.8 | 1.8 | 1.8 | 1.8 |
| Vinegar | 2.4 | 2.4 | 2.4 | 2.4 | 2.4 | 2.4 |
| Flavouring and spices | 0.3 | 0.3 | 0.3 | 0.3 | 0.3 | 0.3 |

| *Mustard types*^{#} | | | | | | |
|---|---|---|---|---|---|---|
| Superfine ground yellow mustard #211 | 0.3 | 0.6 | | | | |
| Pure yellow mustard flour #106 | | | 0.3 | 0.6 | | |
| Fine yellow mustard bran #412 | | | | | 0.3 | 0.6 |

| | | | | | | |
|---|---|---|---|---|---|---|
| ^{#} mustard pastes contain 20% mustard seed, and at a dosage of 3% mustard paste, this corresponds to 0.6% mustard powder in the recipe. | | | | | | |

The emulsions were prepared according to the following process. Egg blend, mustard source and aqueous phase were mixed in a 60L agitated pre-emulsion vessel (Jongia N750, Leeuwarden, The Netherlands). The oil phase was dosed, while continuously stirring. After all oil had been dosed, stirring was continued for 10 seconds. This pre-emulsion was pumped through a colloid mill (ex Charles Ross & Son, Hauppage, New York, USA) for emulsification. Emulsification was done at rotation speeds between 7,000 and 14,000 rpm. Emulsions were collected in glass jars and consistency (Stevens value) was measured after 1 week storage time.

**Table 2 Thickness of emulsions, compositions in Table 1, expressed as Stevens value in gram at 20°C after 1 week storage, as function of mustard source concentration and of emulsification device speed.**

| *Sample* # | *Mustard source concentration [wt%]* | *Stevens value [g]* | | | | | | |
|---|---|---|---|---|---|---|---|---|
| | | *7,000 rpm* | *8,000 rpm* | *9,000 rpm* | *10,000 rpm* | *11, 000 rpm* | *12,000 rpm* | *14, 000 rpm* |
| 1 | 0 | | 130 | 140 | 150 | 150 | 150 | |
| 2 | 0 | | | | 100 | 120 | 110 | |
| 3-1 | 1.5 | | | 130 | 110 | | | |
| 3-2 | 3.0 | 110 | 120 | 130 | 160 | 150 | 160 | |
| 4-1 | 1.5 | | | | 81 | | 100 | 120 |
| 4-2 | 3.0 | | | | 90 | | 120 | |
| 5-1 | 0.3 | | | 100 | 120 | | | |
| 5-2 | 0.6 | | | 120 | 120 | | | |
| 6-1 | 1.5 | | | | 110 | | | |
| 6-2 | 3.0 | | | 90 | 100 | | | |
| 7-1 | 1.5 | | | 120 | 120 | | | |
| 7-2 | 3.0 | | | 100 | 110 | | | |

At a concentration of 0.3% ground mustard seed (or 1.5% mustard paste), the Stevens value of all samples was not as high as the target product containing 75% oil (sample 1). The sample containing 72% oil without mustard seed (sample 2) had a lower Stevens value than the samples containing mustard seed. The highest Stevens value was obtained using white mustard paste, high solids (samples 3-1, 3-2).

At the higher concentration of 3% mustard paste (corresponding to 0.6% ground mustard powder), emulsions were prepared containing 72% oil, which had the similar Stevens value as the emulsion with 75% oil (without mustard seed preparation). In particular the emulsions containing white mustard paste, high solids (samples 3-1, 3-2), gave good results and thickness on Stevens value.

The variation in rotation speed of the emulsification device shows that the Stevens value of reference sample 1 (75% oil) as well as sample 3-2 with white mustard paste, high solids increased until 11,000 rpm. The Stevens value of reference sample 1 then decreased upon further increase of the rotation speed. This behaviour is also shown for sample 2 (72% oil).

The emulsions containing either of the dry samples ground yellow mustard #211 (5-1, 5-2), or yellow mustard flour #106 (6-1, 6-2), or yellow mustard bran #412 (7-1, 7-2) did not have a Stevens value which was as high as the samples with white mustard paste, high solids (3-1, 3-2).

Also syneresis was determined for these samples as function of the rotation speed:

**Table 3 Syneresis of emulsions, compositions in Table 1, expressed as gram drained liquid in gram after 4 weeks storage at 20°C, as function of mustard source concentration and of emulsification device speed.**

| *Sample #* | *Mustard source concentration [wt%]* | *Syneresis value [g]* | | | |
|---|---|---|---|---|---|
| | | *8,000 rpm* | *9,000 rpm* | *10,000 rpm* | *11,000 rpm* |
| 1 | 0 | | 3 | 2 | 2 |
| 2 | 0 | | | 5 | 4 |
| 3-1 | 1.5 | | 3 | | |
| 3-2 | 3.0 | 3 | 2 | | |
| 4-1 | 1.5 | | | | |
| 4-2 | 3.0 | 3 | | | |
| 5-1 | 0.3 | | | 3 | |
| 5-2 | 0.6 | | 4 | | |
| 6-1 | 1.5 | | | | 4 |
| 6-2 | 3.0 | 5 | 4 | 3 | |
| 7-1 | 1.5 | | | 2 | |
| 7-2 | 3.0 | | 3 | 2 | 1 |

These results show that better syneresis values are obtained when the rotation speed increases. When using White mustard paste, high solids (samples 3-1, 3-2), the increase of the mustard concentration leads to lower syneresis. The syneresis value of 1.6 g is the lowest syneresis for the emulsions containing the various mustard seed preparations, at a relatively low rotation speed of the colloid mill. This means that emulsions with a good consistency can be prepared with a relatively low energy input.

### Example 2: Influence of Enzyme Modified Egg Yolk on Thickness of Emulsions

Emulsions were prepared with a largely similar recipe as sample #3 in Table 1, using White mustard paste, high solids (ex Wisconsin Spice, Inc.). The composition of the egg phase was varied, and the use of the white mustard paste, as indicated in Table 4. Water was used as the balance ingredient for these compositions. The same process and equipment was used as in example 1, and the colloid mill was operated at rotation rates 8,000 to 10,000 rpm.

**Table 4 Composition of emulsions containing 72% oil, various amounts of enzyme modified egg yolk and white mustard paste, high solids, and the Stevens value at 20°C after 1 week storage.**

| *Sample* # | *Egg blend [wt%]* | *Enzyme modified egg blend [wt%]* | *White mustard paste [wt%]* | *Stevens value at 20°C [g]* | | |
|---|---|---|---|---|---|---|
| | | | | *8,000 rpm* | *9,000 rpm* | *10,000 rpm* |
| 3-3 | | 6.7 | 0 | 170 | 170 | 220 |
| 3-4 | | 6.7 | 3 | 210 | 240 | 270 |
| 3-5 | | 6.2 | 0 | 150 | 180 | 210 |
| 3-6 | | 6.2 | 3 | 170 | 210 | 220 |
| 2 * | 6.7 | | 0 | | | 100 |
| 3-2 * | 6.7 | | 3 | 120 | 130 | 160 |

| | | | | | | |
|---|---|---|---|---|---|---|
| * samples and data from Table 1 | | | | | | |

These results show that the use of the white mustard paste leads to higher Stevens values as compared to samples without mustard paste. Replacing part of the native egg yolk with enzyme modified egg yolk also leads to higher Stevens values, even higher than for the mayonnaise containing 75% oil, which is the target (sample 1 in Table 1 and Table 2).

These results also show that with increasing colloid mill rotation speed, the Stevens value increases. By using white mustard paste, possibly in combination with enzyme modified egg yolk, the rotation speed of the colloid mill can be decreased, as compared to compositions with higher oil levels without white mustard paste and possibly enzyme modified egg yolk. Still a thickness can be obtained which is required for this kind of products, and which is not too high. This way energy can be saved when producing as compared to standard production methods.

Four further emulsions were prepared with a largely similar recipe as sample #3 in Table 1, using White mustard paste, high solids (ex Wisconsin Spice, Inc.). The composition of the egg phase was varied, and the use of the white mustard paste, as is indicated in Table 5. Water was used as the balance ingredient for these compositions. The same process and equipment was used as in example 1, and the colloid mill was operated at rotation rates 8,000 to 10,000 rpm.

**Table 5 Composition of emulsions containing 72% oil, various amounts of enzyme modified egg yolk and white mustard paste, and the Stevens value at 20°C after 1 week storage.**

| *Sample* # | *Enzyme modified egg blend [wt%]* | *White mustard paste [wt%]* | *Stevens value at 20°C [g]* | |
|---|---|---|---|---|
| | | | *12,000 rpm* | *14, 000 rpm* |
| 3-7 | 5.6 | 0 | 120 | 160 |
| 3-8 | 5.6 | 3 | 210 | 240 |
| 3-9 | 5.2 | 0 | 150 | 190 |
| 3-10 | 5.2 | 3 | 190 | 230 |

### Example 3: Emulsions Containing De-heated White Mustard Paste

Emulsions were prepared with a largely similar recipe as sample #3 in Table 1, this time using De-heated white mustard paste D (ex Wisconsin Spice, Inc.), wherein the composition of the egg phase was varied, as well as the concentration of the de-heated white mustard paste, as indicated in Table 6. Water was used as the balance ingredient. The same process was used as in example 1. The rotation speed of the colloid mill was varied from 12,000 to 14,000 rpm.

**Table 6 Composition of emulsions containing 70% oil, enzyme modified egg yolk, and varying amounts of de-heated white mustard paste, and the Stevens value at 20°C after 1 week storage.**

| *Sample* # | *Oil content [wt%]* | *Egg blend [wt%]* | *Enzyme modified egg blend [wt%]* | *De-heated white mustard paste [wt%]* | *Stevens value at 20°C [g]* | |
|---|---|---|---|---|---|---|
| | | | | | *12,000 rpm* | *14,000 rpm* |
| 30 | 70 | | 6.3 | 1% | 150 | 200 |
| 31 | 70 | | 6.3 | 2% | 170 | 220 |
| 32 | 72 | 7.3 | | 1.5% | 130 | 160 |
| 33 | 72 | 7.3 | | 3.0% | 150 | 180 |
| 34 | 70 | 7.3 | | 3.0% | 130 | 160 |

These compositions show that emulsions containing only 1% of de-heated white mustard paste have a consistency which is comparable to the samples containing white mustard paste, high solids (3-4, 3-6 in Table 4). The taste and flavour of these emulsions was similar to regular emulsions without mustard paste.

The concentrations of allylisothiocyanate and p-hydroxybenzyl isothiocyanate was determined in the white mustard paste, high solids, and de-heated white mustard paste. The concentrations were the following:

**Table 7 Concentration of of allylisothiocyanate and p-hydroxybenzyl isothiocyanate as determined in mustard pastes**

| | Concentration allylisothiocyanate [mg/kg] | Concentration p-hydroxybenzyl isothiocyanate [mg/kg] |
|---|---|---|
| White mustard paste high solids | 2.1 | <1 |
| De-heated white mustard paste D | 1.7 | <1 |

This shows that the de-heated white mustard paste has a lower concentration of isothiocyanate compounds than the regular white mustard paste.

## Claims

1. A composition in the form of an oil-in-water emulsion, comprising
from 65% to 74% by weight of oil,
from 0.1 % to 10% by weight of acid,
from 0.4% to 3.5% by weight of ground white or yellow mustard seed originating from the species *Sinapis alba* or *Brassica hirta,* wherein the ground white or yellow mustard seed is obtained by grinding white or yellow mustard seed in the presence of water and vinegar, wherein the weight ratio between mustard seed and [water and vinegar] ranges from 1:2 to 1:9, and
wherein the ground mustard seed is used in the form of a paste, containing 10% to 30% ground mustard seed and 70% to 90% aqueous phase, including vinegar, and
from 0.5% to 10% by weight of egg yolk,
having a pH ranging from 3 to 5, and
wherein the composition is a mayonnaise, and
wherein the concentration of polymeric or oligomeric water structurants not originating from egg yolk or white mustard seed is maximally 1% by weight of the emulsion, and
wherein the structurant is a compound or a mixture of compounds which is an oligomer (meaning a branched or unbranched molecule containing a maximum of 20 monomer units) or a polymer (meaning a branched or unbranched molecule containing more than 20 monomer units) which is dispersible in water or dissolves in water to thicken or bind the water and increase the viscosity of the mixture as compared to pure water, and
wherein the structurant does not originate from egg yolk, whole egg, enzyme modified egg yolk, egg yolk modified with phospholipase, egg yolk modified with phospholipase A2, white or yellow mustard seed, and ground white or yellow mustard seed, and
wherein the emulsion has a Stevens value at 20°C of at least 70 gram, wherein the Stevens value is determined by using a Stevens LFRA Texture Analyser (ex Brookfield Viscometers Ltd., UK) with a maximum load/measuring range of 1000 grams, and
applying a penetration test of 25 mm using a grid, at 2 mm per second penetration rate, in a cup having a diameter of 65 mm, that contains the emulsion; wherein the grid comprises 76 square openings of approximately 3x3 mm, is made up of wire with a thickness of approximately 1 mm, and has a diameter of 40 mm.

2. A composition according to claim 1, comprising from 70% to 74% by weight of oil, preferably from 71% to 74% by weight.

3. A composition according to claim 1 or 2, wherein at least 20% by weight of the egg yolk has been modified by treatment with a phospholipase, preferably with phospholipase A2.

4. A composition according to any of claims 1 to 3, wherein the concentration of isothiocyanates in the ground mustard seed is less than 10 milligram per kilogram of the ground seed.

5. A composition according to any of claims 1 to 4, wherein the concentration of polymeric or oligomeric water structurants not originating from egg yolk or white mustard seed is maximally 0.5% by weight of the emulsion, preferably maximally 0.2% by weight, preferably wherein the composition is free from polymeric or oligomeric water structurants not originating from egg yolk or white mustard seed.

6. A composition according to any of claims 1 to 5, wherein the emulsion has a Stevens value at 20°C of at least 80 gram, preferably at least 100 gram, preferably from 100 to 200 gram, preferably from 100 to 150 gram, and wherein the Stevens value is determined by using a Stevens LFRA Texture Analyser (ex Brookfield Viscometers Ltd., UK) with a maximum load/measuring range of 1000 grams, and applying a penetration test of 25 mm using a grid, at 2 mm per second penetration rate, in a cup having a diameter of 65 mm, that contains the emulsion; wherein the grid comprises 76 square openings of approximately 3x3 mm, is made up of wire with a thickness of approximately 1 mm, and has a diameter of 40 mm.

7. A method for making a composition according to any of claims 1 to 6, comprising the steps:
a) mixing water, acid, egg yolk, and ground mustard seed in a stirred vessel, wherein the ground white or yellow mustard seed is obtained by grinding white or yellow mustard seed in the presence of water and vinegar; wherein the weight ratio between mustard seed and [water and vinegar] ranges from 1:2 to 1:9; and wherein the ground mustard seed is used in the form of a paste, containing 10% to 30% ground mustard seed and 70% to 90% aqueous phase, including vinegar; and
b) adding the oil to the mixture of step a) while stirring;
c) homogenising the mixture of step b) to create an oil-in-water emulsion wherein the oil droplets have a volume weighted mean droplet size D3,3 of less than 10 micrometer; using a colloid mill operating at a rotation rate ranging from 2,000 to 14,000 rpm;
and wherein the concentration of polymeric or oligomeric water structurants not originating from egg yolk or white mustard seed is maximally 1% by weight of the emulsion, and
wherein the structurant is a compound or a mixture of compounds which is an oligomer (meaning a branched or unbranched molecule containing a maximum of 20 monomer units) or a polymer (meaning a branched or unbranched molecule containing more than 20 monomer units) which is dispersible in water or dissolves in water to thicken or bind the water and increase the viscosity of the mixture as compared to pure water, and
wherein the structurant does not originate from egg yolk, whole egg, enzyme modified egg yolk, egg yolk modified with phospholipase, egg yolk modified with phospholipase A2, white or yellow mustard seed, and ground white or yellow mustard seed.

8. Use of ground white or yellow mustard seed as ingredient of an oil-in-water emulsion to reduce the concentration of oil in the emulsion, wherein the ground white or yellow mustard seed is obtained by grinding white or yellow mustard seed in the presence of water and vinegar, and
wherein the weight ratio between mustard seed and [water and vinegar] ranges from 1:2 to 1:9; and
wherein the ground mustard seed is used in the form of a paste, containing 10% to 30% ground mustard seed and 70% to 90% aqueous phase, including vinegar, and
wherein the emulsion is a mayonnaise,
and wherein the concentration of polymeric or oligomeric water structurants not originating from egg yolk or white mustard seed is maximally 1% by weight of the emulsion, and
wherein the structurant is a compound or a mixture of compounds which is an oligomer (meaning a branched or unbranched molecule containing a maximum of 20 monomer units) or a polymer (meaning a branched or unbranched molecule containing more than 20 monomer units) which is dispersible in water or dissolves in water to thicken or bind the water and increase the viscosity of the mixture as compared to pure water, and
wherein the structurant does not originate from egg yolk, whole egg, enzyme modified egg yolk, egg yolk modified with phospholipase, egg yolk modified with phospholipase A2, white or yellow mustard seed, and ground white or yellow mustard seed.

## Patentansprüche

1. Zusammensetzung in Form einer Öl-in-Wasser-Emulsion, umfassend
von 65 bis 74 Gewichts-% Öl,
von 0,1 bis 10 Gewichts-% Säure,
von 0,4 bis 3,5 Gewichts-% gemahlene Körner von Weißem oder Gelbem Senf, die von der Spezies *Sinapis alba* oder *Brassica hirta* stammen, wobei die gemahlenen Körner von Weißem oder Gelbem Senf durch Mahlen von Körnern von Weißem oder Gelbem Senf in Gegenwart von Wasser und Essig erhalten werden,
wobei das Gewichtsverhältnis zwischen den Senfkörnern und [Wasser und Essig] von 1:2 bis 1:9 liegt und
wobei die gemahlenen Senfkörner in Form einer Paste verwendet werden, die 10% bis 30% gemahlene Senfkörner und 70% bis 90% wässrige Phase, einschließlich Essig, enthält, und
von 0,5 bis 10 Gewichts-% Eigelb,
mit einem pH in dem Bereich von 3 bis 5 und
wobei die Zusammensetzung eine Mayonnaise darstellt und
wobei die Konzentration der polymeren oder oligomeren Wasserstrukturierungsmittel, die nicht vom Eigelb oder den Körnern des Weißen Senfs stammen, maximal 1 Gewichts-% der Emulsion beträgt und
wobei das Strukturierungsmittel eine Verbindung oder eine Mischung von Verbindungen ist, wobei es sich um ein Oligomer (bedeutend ein verzweigtes oder unverzweigtes Molekül, das maximal 20 Monomer-Einheiten enthält) oder ein Polymer (bedeutend ein verzweigtes oder unverzweigtes Molekül, das mehr als 20 Monomer-Einheiten enthält) handelt, das in Wasser dispergierbar ist oder sich in Wasser löst, um zu verdicken oder das Wasser zu binden und um die Viskosität der Mischung, verglichen mit reinem Wasser, anzuheben und
wobei das Strukturierungsmittel nicht vom Eigelb, von Vollei, enzymmodifiziertem Eigelb, Eigelb modifiziert mit Phospholipase, Eigelb modifiziert mit Phospholipase A2, Körnern von Weißem oder Gelbem Senf und gemahlenen Körnern von Weißem oder Gelbem Senf stammt und
wobei die Emulsion einen Stevens-Wert bei 20°C von mindestens 70 Gramm aufweist, wobei der Stevens-Wert unter Verwendung eines Stevens-LFRA-Texture-Analysengeräts (von Brookfield Viscosimeters Ltd., UK) mit einem maximalen Belastungs-/Messbereich von 1000 Gramm und unter Anwendung eines Penetrationstests von 25 mm unter Verwendung eines Gitters, bei einer Penetrationsrate von 2 mm pro Sekunde, in einem Becher mit einem Durchmesser von 65 mm, der die Emulsion enthält, bestimmt wird, wobei das Gitter 76 quadratische Öffnungen von etwa 3x3 mm aufweist, mit Draht einer Stärke von etwa 1 mm aufgebaut ist und einen Durchmesser von 40 mm aufweist.

2. Zusammensetzung nach Anspruch 1, umfassend von 70 bis 74 Gewichts-% Öl, vorzugsweise von 71 bis 74 Gewichts-%.

3. Zusammensetzung nach Anspruch 1 oder 2, wobei mindestens 20 Gewichts-% des Eigelbs durch Behandlung mit einer Phospholipase, vorzugsweise mit Phospholipase A2, modifiziert worden sind.

4. Zusammensetzung nach irgendeinem der Ansprüche 1 bis 3, wobei die Konzentration der Isothiocyanate in den gemahlenen Senfkörnern weniger als 10 Milligramm pro Kilogramm der gemahlenen Körner beträgt.

5. Zusammensetzung nach irgendeinem der Ansprüche 1 bis 4, wobei die Konzentration der polymeren oder oligomeren Wasserstrukturierungsmittel, die nicht von Eigelb oder den Körnern von Weißem Senf stammen, maximal 0,5 Gewichts-% der Emulsion, vorzugsweise maximal 0,2 Gewichts-%, beträgt, wobei die Zusammensetzung vorzugsweise frei von polymeren oder oligomeren Wasserstrukturierungsmitteln ist, die nicht von Eigelb oder Körnern von Weißem Senf stammen.

6. Zusammensetzung nach irgendeinem der Ansprüche 1 bis 5, wobei die Emulsion einen Stevens-Wert bei 20°C von mindestens 80 Gramm, vorzugsweise mindestens 100 Gramm, bevorzugt 100 bis 200 Gramm, bevorzugt von 100 bis 150 Gramm, aufweist und worin der Stevens-Wert unter Verwendung eines Stevens-LFRA-Texture-Analysengeräts (von Brookfield Viscosimeters Ltd., UK) mit einem maximalen Belastungs-/Messbereich von 1000 Gramm und unter Anwendung eines Penetrationstests von 25 mm unter Verwendung eines Gitters, bei einer Penetrationsrate von 2 mm pro Sekunde, in einem Becher mit einem Durchmesser von 65 mm, der die Emulsion enthält, bestimmt wird, wobei das Gitter 76 quadratische Öffnungen von etwa 3x3 mm aufweist, mit Draht einer Stärke von etwa 1 mm aufgebaut ist und einen Durchmesser von 40 mm aufweist.

7. Verfahren zur Herstellung einer Zusammensetzung nach irgendeinem der Ansprüche 1 bis 6, umfassend die Schritte:
a) Mischen von Wasser, Säure, Eigelb und gemahlenen Senfkörnern in einem Rührkessel, wobei die Körner von Weißem oder Gelbem Senf durch Mahlen von Körnern von Weißem oder Gelbem Senf in Gegenwart von Wasser und Essig erhalten werden, wobei das Gewichtsverhältnis zwischen den Senfkörnern und [Wasser und Essig] von 1:2 bis 1:9 liegt und wobei die gemahlenen Senfkörner in Form einer Paste verwendet werden, die 10% bis 30% gemahlene Senfkörner und 70% bis 90% wässrige Phase, einschließlich Essig, enthält, und
b) Zugeben von Öl zu der Mischung des Schritts a) unter Rühren,
c) Homogenisieren der Mischung von Schritt b), um eine Öl-in-Wasser-Emulsion zu bilden, wobei die Öl-Tröpfchen eine Volumen-gewichtete durchschnittliche Tröpfchengröße D3,3 von weniger als 10 Mikrometer aufweisen, unter Verwendung einer Kolloid-Mühle, die mit einer Rotationsgeschwindigkeit betrieben wird, die im Bereich von 2.000 und 14.000 U/min liegt,
und wobei die Konzentration der polymeren oder oligomeren Wasserstrukturierungsmittel, die nicht von Eigelb oder Körnern von Weißem Senf stammen, maximal 1 Gewichts-% der Emulsion beträgt und
wobei das Strukturierungsmittel eine Verbindung oder eine Mischung von Verbindungen darstellt, wobei es sich um ein Oligomer (bedeutend ein verzweigtes oder unverzweigtes Molekül, das maximal 20 Monomer-Einheiten enthält) oder ein Polymer (bedeutend ein verzweigtes oder unverzweigtes Molekül, das mehr als 20 Monomer-Einheiten enthält) handelt, das in Wasser dispergierbar ist oder sich in Wasser löst, um zu verdicken oder das Wasser zu binden und um die Viskosität der Mischung, verglichen mit reinem Wasser, anzuheben und
wobei das Strukturmittel nicht vom Eigelb, von Vollei, enzymmodifiziertem Eigelb, Eigelb modifiziert mit Phospholipase, Eigelb modifiziert mit Phospholipase A2, Körnern von Weißem oder Gelbem Senf und gemahlenen Körnern von Weißem oder Gelbem Senf stammt.

8. Verwendung von gemahlenen Körnern von Weißem oder Gelbem Senf als Bestandteil einer Öl-in-Wasser-Emulsion, um die Konzentration des Öls in der Emulsion herabzusetzen, wobei die gemahlenen Körner von Weißem oder Gelbem Senf durch Mahlen von Körnern von Weißem oder Gelbem Senf in Gegenwart von Wasser und Essig erhalten werden und
wobei das Gewichtsverhältnis zwischen den Senfkörnern und [Wasser und Essig] von 1:2 bis 1:9 liegt und
wobei die gemahlenen Senfkörner in Form einer Paste verwendet werden, die 10% bis 30% gemahlene Senfkörner und 70% bis 90% wässrige Phase, einschließlich Essig, enthält und wobei die Emulsion eine Mayonnaise ist und wobei die Konzentration der polymeren oder oligomeren Wasserstrukturierungsmittel, die nicht von Eigelb oder Körnern von Weißem Senf stammen, maximal 1 Gewichts-% der Emulsion beträgt und
wobei das Strukturierungsmittel eine Verbindung oder eine Mischung von Verbindungen darstellt, wobei es sich um ein Oligomer (bedeutend ein verzweigtes oder unverzweigtes Molekül, das maximal 20 Monomer-Einheiten enthält) oder ein Polymer (bedeutend ein verzweigtes oder unverzweigtes Molekül, das mehr als 20 Monomer-Einheiten enthält) handelt, das in Wasser dispergierbar ist oder sich in Wasser löst, um zu verdicken oder das Wasser zu binden und um die Viskosität der Mischung, vergleichen mit reinem Wasser, anzuheben und wobei das Strukturierungsmittel nicht von Eigelb, Vollei, enzymmodifiziertem Eigelb, mit Phospholipase modifiziertem Eigelb, mit Phospholipase A2 modifiziertem Eigelb, Körnern von Weißem oder Gelbem Senf oder gemahlenen Körnern von Weißem oder Gelbem Senfs stammt.

## Revendications

1. Composition dans la forme d'une émulsion huile-dans-eau, comprenant
de 65 % à 74 % en masse d'huile,
de 0,1 % à 10 % en masse d'acide,
de 0,4 % à 3,5 % en masse de graine de moutarde blanche ou jaune broyée provenant des espèces *Sinapis alba* ou *Brassica hirta,* où la graine de moutarde blanche ou jaune broyée est obtenue par broyage de graine de moutarde blanche ou jaune en présence d'eau et de vinaigre,
où le rapport massique entre la graine de moutarde et [eau et vinaigre] est de 1:2 à 1:9, et
où la graine de moutarde broyée est utilisée dans la forme d'une pâte, contenant de 10 % à 30 % de graine de moutarde broyée et de 70 % à 90 % de phase aqueuse, incluant du vinaigre, et
de 0,5 % à 10 % en masse de jaune d'oeuf,
ayant un pH de 3 à 5, et
où la composition est une mayonnaise, et
où la concentration en structurants dans l'eau polymères ou oligomères ne provenant pas de jaune d'oeuf ou de graine de moutarde blanche est au maximum de 1 % en masse de l'émulsion, et
où le structurant est un composé ou un mélange de composés qui est un oligomère (indiquant une molécule ramifiée ou non ramifiée contenant un maximum de 20 unités monomères) ou un polymère (indiquant une molécule ramifiée ou non ramifiée contenant plus de 20 unités monomères) qui est dispersible dans l'eau ou se dissout dans l'eau pour épaissir ou lier l'eau et augmenter la viscosité du mélange en comparaison à de l'eau pure, et
où le structurant ne provient pas de jaune d'oeuf, d'oeuf entier, de jaune d'oeuf modifié par une enzyme, de jaune d'oeuf modifié avec une phospholipase, de jaune d'oeuf modifié avec une phospholipase A2, une graine de moutarde blanche ou jaune, et de graine de moutarde blanche ou jaune broyée, et
où l'émulsion présente une valeur Stevens à 20°C d'au moins 70 grammes, où la valeur Stevens est déterminée en utilisant un Stevens LFRA Texture Analyser (ex Brookfield Viscometers Ltd., UK) avec un intervalle de charge/mesure maximum de 1 000 grammes, et en appliquant un test de pénétration de 25 mm en utilisant une grille, à une vitesse de pénétration de 2 mm par seconde, dans un bol ayant un diamètre de 65 mm, qui contient l'émulsion ; où la grille comprend 76 ouvertures carrées d'approximativement 3x3 mm, est constituée d'un câble avec une épaisseur d'approximativement 1 mm, et présente un diamètre de 40 mm.

2. Composition selon la revendication 1, comprenant de 70 % à 74 % en masse d'huile, de préférence de 71 % à 74 % en masse.

3. Composition selon la revendication 1 ou 2, dans laquelle au moins 20 % en masse du jaune d'oeuf ont été modifiés par traitement avec une phospholipase, de préférence avec une phospholipase A2.

4. Composition selon l'une quelconque des revendications 1 à 3, dans laquelle la concentration d'isothiocyanates dans la graine de moutarde broyée est inférieure à 10 milligrammes par kilogramme de la graine broyée.

5. Composition selon l'une quelconque des revendications 1 à 4, dans laquelle la concentration de structurants dans l'eau polymères ou oligomères ne provenant pas de jaune d'oeuf ou de graine de moutarde blanche est au maximum de 0,5 % en masse de l'émulsion, de préférence au maximum de 0,2 % en masse, de préférence où la composition est exempte de structurants dans l'eau polymères ou oligomères ne provenant pas de jaune d'oeuf ou de graine de moutarde blanche.

6. Composition selon l'une quelconque des revendications 1 à 5, où l'émulsion présente une valeur Stevens à 20°C d'au moins 80 grammes, de préférence d'au moins 100 grammes, de préférence de 100 à 200 grammes, de préférence de 100 à 150 grammes, et où la valeur Stevens est déterminée en utilisant un Stevens LFRA Texture Analyser (ex Brookfield Viscometers Ltd., UK) avec un intervalle de charge/mesure maximum de 1 000 grammes, et en appliquant un test de pénétration de 25 mm en utilisant une grille, à une vitesse de pénétration de 2 mm par seconde, dans un bol ayant un diamètre de 65 mm, qui contient l'émulsion ; où la grille comprend 76 ouvertures carrées d'approximativement 3x3 mm, est constituée de câble avec une épaisseur d'approximativement 1 mm, et présente un diamètre de 40 mm.

7. Procédé de fabrication d'une composition selon l'une quelconque des revendications 1 à 6, comprenant les étapes :
a) de mélange d'eau, d'acide, de jaune d'oeuf, et de graine de moutarde broyée dans une cuve agitée, où la graine de moutarde blanche ou jaune broyée est obtenue par broyage de graine de moutarde blanche ou jaune en présence d'eau et de vinaigre ; où le rapport massique entre la graine de moutarde et [eau et vinaigre] est de 1:2 à 1:9 ; et
où la graine de moutarde broyée est utilisée dans la forme d'une pâte, contenant de 10 % à 30 % de graine de moutarde broyée et de 70 % à 90 % de phase aqueuse, incluant du vinaigre ; et
b) d'addition de l'huile au mélange de l'étape a) tout en agitant ;
c) d'homogénéisation du mélange de l'étape b) pour créer une émulsion huile-dans-eau où les gouttelettes d'huile présentent une taille moyenne de gouttelettes pondérée en volume D3,3 inférieure à 10 micromètres ; en utilisant un broyeur de colloïde fonctionnant à une vitesse de rotation de 2 000 à 14 000 tr/min ;
et où la concentration de structurants dans l'eau polymères ou oligomères ne provenant pas de jaune d'oeuf ou de graine de moutarde blanche est au maximum de 1 % en masse de l'émulsion, et
où le structurant est un composé ou un mélange de composés qui est un oligomère (indiquant une molécule ramifiée ou non ramifiée contenant un maximum de 20 unités monomères) ou un polymère (indiquant une molécule ramifiée ou non ramifiée contenant plus de 20 unités monomères) qui est dispersible dans l'eau ou qui se dissout dans l'eau pour épaissir ou lier l'eau et augmenter la viscosité du mélange en comparaison à de l'eau pure, et
où le structurant ne provient pas de jaune d'oeuf, d'oeuf entier, de jaune d'oeuf modifié par une enzyme, de jaune d'oeuf modifié avec une phospholipase, de jaune d'oeuf modifié avec une phospholipase A2, de graine de moutarde blanche ou jaune, et de graine de moutarde blanche ou jaune broyée.

8. Utilisation de graine de moutarde blanche ou jaune broyée comme ingrédient d'une émulsion huile-dans-eau pour réduire la concentration d'huile dans l'émulsion, dans laquelle la graine de moutarde blanche ou jaune broyée est obtenue par broyage de graine de moutarde blanche ou jaune en présence d'eau et de vinaigre, et
où le rapport massique entre graine de moutarde et [eau et vinaigre] est de 1:2 à 1:9 ; et
où la graine de moutarde broyée est utilisée dans la forme d'une pâte, contenant de 10 % à 30 % de graine de moutarde broyée et de 70 % à 90 % de phase aqueuse, incluant du vinaigre, et
où l'émulsion est une mayonnaise,
et où la concentration de structurants dans l'eau polymères ou oligomères ne provenant pas de jaune d'oeuf ou de graine de moutarde blanche est au maximum de 1 % en masse de l'émulsion, et
où le structurant est un composé ou un mélange de composés qui est un oligomère (indiquant une molécule ramifiée ou non ramifiée contenant un maximum de 20 unités monomères) ou un polymère (indiquant une molécule ramifiée ou non ramifiée contenant plus de 20 unités monomères) qui est dispersible dans l'eau ou se dissout dans l'eau pour épaissir ou lier l'eau et augmenter la viscosité du mélange en comparaison à de l'eau pure, et
où le structurant ne provient pas de jaune d'oeuf, d'oeuf entier, de jaune d'oeuf modifié par une enzyme, de jaune d'oeuf modifié par une phospholipase, de jaune d'oeuf modifié avec une phospholipase A2, de graine de moutarde blanche ou jaune, et de graine de moutarde blanche ou jaune broyée.
